## Europäisches Patentamt
## European Patent Office
## Office européen des brevets

(11) Veröffentlichungsnummer: **0 100 430**
**B1**

(12) **EUROPÄISCHE PATENTSCHRIFT**

(45) Veröffentlichungstag der Patentschrift:
**10.01.90**

(51) Int. Cl.⁴: **C 08 F 2/00**

(21) Anmeldenummer: **83106231.0**

(22) Anmeldetag: **27.06.83**

(54) **Polymerisationsverfahren.**

(30) Priorität: **08.07.82 DE 3225521**
**07.10.82 DE 3237076**

(43) Veröffentlichungstag der Anmeldung:
**15.02.84 Patentblatt 84/7**

(45) Bekanntmachung des Hinweises auf die Patenterteilung:
**10.01.90 Patentblatt 90/2**

(84) Benannte Vertragsstaaten:
**DE**

(56) Entgegenhaltungen:
**FR-A- 1 462 866**
**US-A- 4 312 969**

(73) Patentinhaber: **BAYER AG,**
**D-5090 Leverkusen 1 Bayerwerk (DE)**

(72) Erfinder: **König, Joachim, Dr., Auf dem Broich 25,**
**D-5068 Odenthal (DE)**
Erfinder: **Süling, Carlhans, Dr.,**
**Carl-Leverkus-Strasse 10, D-5068 Odenthal (DE)**
Erfinder: **Korte, Siegfried, Dr., Bamberger Strasse 6,**
**D-5090 Leverkusen (DE)**

## Beschreibung

Die Erfindung betrifft ein Verfahren zur Polymerisation von Vinylmonomeren in heterogener Phase unter Zusatz von Flüssigkeiten zur Regulierung der Reaktionstemperatur.

Polymerisationen in heterogener Phase sind bekannt und z.B. in Houben-Weyl 14/1, Seite 133 ff. zusammenfassend beschrieben. Das Monomere wird in einem geeigneten flüssigen Medium, meist Wasser oder wäßrigen Systemen, gelöst oder feinverteilt und polymerisiert, wobei das Polymere in Wasser unlöslich ist. Vorteile dieser Verfahrensweise sind ein niedrigviskoses Reaktionsmedium sowie eine gute Abfuhr der Polymerisationswärme.

Bei der Perlpolymerisation wird ein wasserunlösliches Monomeres durch intensives Rühren in einzelne Tröpfchen zerteilt, die durch Schutzkolloide, z.B. Polyvinylalkohol zusätzlich stabilisiert werden. Die Polymerisation wird durch monomerlösliche Katalysatoren in den Tröpfchen gestartet.

Ist bei dieser Verfahrensweise die Ausbildung regelmäßiger Perlen gestört, weil z.B. das Polymere im Monomeren unlöslich ist, so spricht man von Suspensionspolymerisation. Suspensions- und Perlpolymerisate können nach Ablauf der Polymerisation durch Filtration isoliert werden.

Die Emulsionspolymerisation wird mit wasserlöslichen Katalysatoren in Gegenwart von Emulgatoren, z.B. Natriumalkylsulfat oder Natriumalkylsulfonat durchgeführt, wobei das Polymerisat in dispergierter Form als Latex erhalten wird.

Wasserlösliche Monomere wie Acrylnitril können nach der Verfahrensweise der Fällungspolymerisation mit wasserlöslichen Katalysatoren, meist mit Redoxsystemen wie Kaliumperoxodisulfat/Natriumbisulfit polymerisiert werden. Das Polymerisat ist in Wasser unlöslich und fällt in körniger Form an, kann also abfiltriert werden.

Polymerisationsreaktionen sind exotherme Prozesse, bei denen große Wärmemengen abgeführt werden müssen. Üblicherweise werden diese Reaktionen kontinuierlich oder diskontinuierlich im Autoklaven durchgeführt, wobei die Reaktionswärme durch Kühlung der Reaktorwände abgeführt wird. Die Wärmeabfuhr über einen solchen Kühlmantel ist bei relativ kleinen Autoklaven und langsamen Umsatzgeschwindigkeiten normalerweise in ausreichendem Maße gewährleistet.

Aus wirtschaftlichen Gründen ist man jedoch bestrebt, höhere Polymerisatausbeuten zu gewinnen. Dies kann geschehen durch die Verwendung von großen Reaktoren bis ca. 200 m$^3$ Reaktorvolumen oder aber durch die Erhöhung der Umsatzgeschwindigkeit bei kürzerer Verweilzeit in einem kleineren Reaktor. In beiden Fällen ist eine ausreichende Wärmeabfuhr über die Reaktorwände nicht mehr möglich, wie z.B. in Advance Chemical Series 128, Seite 37 (1973) gezeigt wird, da z.B. bei großen Reaktoren das Verhältnis von Oberfläche zu Volumen immer kleiner wird. In diesen Fällen sind zusätzliche Kühlaggregate erforderlich, um eine ausreichende Wärmeabfuhr zu gewährleisten.

So ist es z.B. möglich, Kühlschlangen oder Kühlrohre im Reaktor zu installieren. Diese zusätzliche Ausrüstung ist nur effektiv, wenn ihre Kühlfläche relativ groß verglichen mit der Wandfläche ist. Zusätzlich beeinflussen diese Kühlrohre die Durchmischung des Reaktors und sind deshalb nur für niedrigviskose homogene Flüssigkeiten geeignet, nicht jedoch für heterogene Polymerisationsreaktionen, bei denen die Gefahr von Ablagerungen besteht, wodurch der Wärmeübergang wiederum erschwert würde und Polymerisate mit inhomogenen Anteilen erhalten würden. Zudem sind Kühlschlangen und Kühlrohre hinderlich bei der Reinigung des Reaktors.

Weiterhin kann man Kühlzylinder und Wandkratzer installieren, die jedoch bei großen Reaktoren aufwendig sind, sich im Betrieb als störanfällig erwiesen haben und meistens das Problem der Ablagerungen nur für die Reaktorwand, nicht jedoch für sich selbst, also für die Wischblätter lösen. Auch in diesem Fall ist eine Reinigung von Reaktor und Kühlaggregat schwierig und aufwendig.

Weiterhin ist es möglich, den Reaktorinhalt durch außen angebrachte, gekühlte Rohrleitungen umzupumpen. Durch eine entsprechend große Auslegung der Kühlaggregate kann diese Art der Kühlung sehr effektiv gestaltet werden, ist jedoch sehr aufwendig, wenn große Kühlflächen erforderlich sind. Die Störanfälligkeit ist groß, da das heterogene, aktive Polymerisationsmedium leicht zu Ablagerungen und Verstopfungen in den Rohrleitungen führen und einen Ausfall der Pumpen verursachen kann.

Eine weitere Methode der Wärmeabfuhr ist die Siedekühlung des Reaktionsmediums durch Verdampfen des Wassers, das in einem Kondensator oberhalb des Reaktionskessels kondensiert und wieder dem Reaktor zugeführt wird. Für Monomere, die niedriger als Wasser sieden oder die mit Wasser Azeotrope bilden, ist dieses Verfahren weniger geeignet, da sich in diesem Fall ein großer Teil des Monomeren bei hohen Temperaturen und in hoher Konzentration im Kondensator befindet, was Polymerisatbildung (Popcorn-Bildung) und Ablagerungen im Kondensator verursachen kann und die Produktqualität durch Stippen und Fischaugen verschlechtert, wenn solche Anteile in das Polymerisationsmedium gelangen.

Die Kühlung der Dosierlösungen ist eine weitere Methode zur Wärmeabfuhr, wobei zusätzlich kaltes Wasser oder Eis in den Reaktor gepumpt werden kann. Neben einer eventuell unerwünschten Verdünnung des Reaktionsmediums sind in diesem Falle jedoch hohe Kühlenergien und niedrige Temperaturen der Dosierlösungen erforderlich, um ausreichende Wärmemengen abführen zu können, wodurch das Verfahren unwirtschaftlich wird.

Aufgabe der vorliegenden Erfindung war es, ein Verfahren zur Polymerisation in heterogener Phase zur Verfügung zu stellen, das auch bei großen Reaktoren und hohen Umsatzgeschwindigkeiten in der Lage ist, eine ausreichende Wärmeabfuhr und eine Regulierung der Reaktionstemperatur im Reaktionsmedium zu ermöglichen und das die obengenannten Nachteile nicht aufweist.

Es wurde nun gefunden, daß man Polymerisationen von Vinylmonomeren in heterogener Phase durchführen kann, wenn man dem Reaktionsmedium zur Wärmeabführung und zur Regulierung der Reaktionstemperatur Flüssigkeiten zusetzt, die unter den Reaktionsbedingungen das Polymerisat nicht lösen und deren Siedetemperaturen unter den genutzten Polymerisationsbedingungen kleiner oder gleich den technisch vorgegebenen Umsetzungstemperaturen sind, und im Reaktionssystem freiwerdende Wärme durch Verdampfen dieser Flüssigkeiten abführt.

Gegenstand der Erfindung ist somit ein Verfahren zur Polymerisation von Vinylmonomeren in Flüssigkeit, die nicht die Polymerisationsreaktion beeinflußt und durch Rückflußsieden das Polymerisationssystem bei relativ gleichmäßiger Temperatur hält, dadurch gekennzeichnet, daß man in Wasser oder einem wäßrigen Polymerisationsmedium Vinylmonomere einsetzt, deren Homo- oder Copolymerisate im gewählten Reaktionsmedium unlöslich sind, wobei als Vinylmonomere Styrole, Halogenolefine, Vinylester, Vinylether, ungesättigte Nitrile, Ester der Acryl- und Methacrylsäure, Maleinimid, N-substituierte Maleinimide und Diolefine eingesetzt werden, als niedrigsiedende Flüssigkeit solche zugesetzt werden, die unter den Reaktionsbedingungen das Polymerisat nicht lösen, deren Siedetemperatur unter den genutzten Polymerisationsbedingungen kleiner als die technisch vorgegebenen Umsetzungstemperaturen sind, und in einer solchen Menge zugesetzt werden, daß die im gesamten Reaktor befindliche Menge 0,005 bis 5,3 Gew.-%, bezogen auf das übrige Reaktionsgemisch, beträgt, die zugesetzte Flüssigkeit verdampft, die Einhaltung der gewünschten Temperatur des Reaktionsgemisches durch dosierte Zugabe der kondensierten Flüssigkeit, die über eine Pumpe die Flüssigkeit wieder in das Reaktionsgefäß eindosiert, gesteuert wird, und daß die Polymerisation ein Perlpolymerisation, Suspensionspolymerisation, Emulsionspolymerisation oder Fällungspolymerisation ist.

Als Vinylmonomere kommen alle Monomere in Betracht, deren Homo- oder Copolymerisate in dem gewählten Reaktionsmedium unlöslich sind. Beispiele sind Styrol, substituierte Styrole wie α-Methylstyrol, 4-tert.-Butylstyrol oder p-Chlorstyrol, Halogenolefine wie Vinylchlorid, Vinylidenchlorid oder fluorsubstituierte Olefine, Vinylester wie Vinylacetat, Vinylether, ungesättigte Nitrile wie Acrylnitril oder Methacrylnitril, Ester wie Acrylsäuremethylester, Maleinimid oder N-substituierte Maleinimide, weiterhin Diolefine wie Butadien, Isopren oder Chloropren.

Bevorzugte Ausführungsformen sind die Emulsionspolymerisation und die Perlpolymerisation in wäßrigem Medium von Estern der Acrylsäure und der Methacrylsäure allein oder mit bis zu 50 Gew.-% weiteren Comonomeren; ferner die Emulsionspolymerisation oder Perlpolymerisation in wäßrigem Medium von Styrol oder substituiertem Styrol allein oder mit bis zu 50 Gew.-% an weiteren Comonomeren wie Acrylnitril, Acrylsäureester oder Butadien; weiterhin die Emulsionspolymerisation von Diolefinen allein oder mit bis zu 50 Gew.-% an weiteren Comonomeren wie Styrol, Acrylnitril oder Acrylsäureester; ferner die Emulsionspolymerisation oder Suspensionspolymerisation in wäßrigem Medium von Vinylchlorid allein oder mit bis zu 50 Gew.-% an weiteren Comonomeren, z.B. Vinylidenchlorid, Vinylacetat, Acrylnitril, Acrylsäureester, Methacrylsäureester sowie Estern und Amiden der Maleinsäure und der Fumarsäure; schließlich die Emulsionspolymerisation, Perlpolymerisation oder Dispersionspolymerisation in wäßrigem Medium von Vinylestern wie Vinylacetat, Vinylpropionat oder Vinylstearat allein oder mit bis zu 50 Gew.-% an weiteren Comonomeren wie ungesättigten Dicarbonsäuren bzw. deren Estern, Maleinsäureanhydrid, Maleinsäurehalbester, Acrylsäure und Crotonsäure, Vinylchlorid oder Estern der Acryl- und Methacrylsäure.

Besonders bevorzugt ist die Fällungspolymerisation in wäßrigem Medium von Acrylnitril allein oder mit bis zu 50 Gew.-% an weiteren Comonomeren, wobei als Comonomere alle mit Acrylnitril copolymerisierbaren ethylenisch ungesättigten Verbindungen geeignet sind, wie Ester der Acryl- und Methacrylsäure, Vinylester aliphatischer Carbonsäuren, Styrol und alkylierte Styrole, Halogenolefine oder Maleinimid und N-substituierte Maleinimide. Als Comonomere in Mengen bis zu ca. 25 Gew.-% sind auch Vinylmonomere möglich, deren Homopolymerisate in dem gewählten Reaktionsmedium löslich sind, z.B. Acrylsäure, Methacrylsäure, N-Vinylpyrrolidon, Vinylpyridine, Vinylsulfonsäure, Allylsulfonsäure, Methallylsulfonsäure, Styrolsulfonsäure oder 2-Acrylamido-2-methylpropansulfonsäure und deren Salze.

Als Reaktionsmedium für die Polymerisation kommen alle Lösungsmittel in Frage, in denen eine Polymerisation in heterogener Phase möglich und in denen das Polymerisat nicht löslich ist.

Bevorzugte Reaktionsmedien sind Wasser und wäßrige Systeme, z.B. Mischungen von Wasser mit geeigneten mischbaren Lösungsmitteln. Solche Lösungsmittel sind z.B. Alkohole wie Methanol, Ethanol, Isopropanol, tert.-Butanol, Glykol und Glycerin, ferner Formamid, Dimethylformamid, Dimethylacetamid, Dioxan, Dimethylsulfoxid, Aceton und Methylethylketon.

Als Flüssigkeit zur Abführung der Polymerisationswärme und zur Regulierung der Polymerisationstemperatur sind alle Komponenten geeignet, die unter den Reaktionsbedingungen das Polymerisat nicht lösen und deren Siedetemperaturen unter den genutzten Polymerisationsbedingungen kleiner oder gleich den technisch vorgegebenen Umsetzungstemperaturen sind und die durch Verdampfen die im Reaktionssystem freiwerdende Wärme direkt abführen können. Beispiele sind niedrigsiedende Kohlenwasserstoffe mit bis zu 8 Kohlenstoffatomen wie Ethan, Propan, Butan, Pentan oder Hexan sowie Isomere und Gemische dieser Komponenten wie niedrig siedende Petrolether, cycloaliphatische und aromatische Kohlenwasserstoffe wie Benzol oder Cyclohexan, Ether wie Diethylether, Ester wie Essigsäureethylester, Schwefelkohlenstoff, ferner chlor-, chlorfluor- oder fluorsubstituierte Kohlenwasserstoffe mit bis zu 8 Kohlenstoffatomen und Siedepunkten zwischen −90 und +90 °C, z.B. Methylchlorid, Methylenchlorid, Chloroform, Tetrachlorkohlenstoff, Ethylchlorid, Trichlorethylen, Trichlorfluormethan, Dichlordifluormethan, Chlordifluormethan, Trichlortrifluorethan, Monochlormonofluorethan, Dichlortrifluorethan, Monochlordifluorethan, Dichlortetrafluorethan, Monochlortetrafluorethan, Difluorethan, Pentafluorethan und Perfluorcyclooctan sowie Gemische dieser Komponenten.

Bevorzugt sind Flüssigkeiten, die mit dem Reaktionsmedium nicht mischbar sind und die so gewählt sind, daß unter den Reaktionsbedingungen eine Lösung des Polymeren in diesen Flüssigkeiten vermieden wird, wodurch evtl. Beeinflussungen des Reaktionsablaufes gering gehalten werden. Angaben über Lösungsmittel und Nichtlöser für Polymere findet man z.B. in J. Brandrup und E.H. Immergut, Polymer Handbook, Second Endition IV, Seite 241 (1975).

Die Flüssigkeit kann so ausgewählt werden, daß ihre Siedetemperatur unter den genutzten Polymerisationsbedingungen der technisch vorgegebenen Umsetzungstemperatur entspricht. Ist diese Bedingung bei Normaldruck nicht erfüllt, so kann die Siedetemperatur durch Variation des Druckes, also durch eine Fahrweise bei Unterdruck oder Überdruck, leicht auf die gewünschte Polymerisationstemperatur eingestellt werden. Selbstverständlich können auch Gemische verschiedener Flüssigkeiten eingesetzt werden, wobei durch eine geeignete Wahl des Mischungsverhältnisses oder durch Azeotropbildung eine optimale Einstellung der Siedetemperatur oder des Siedebereiches möglich ist. Durch das erfindungsgemäße Verfahren kann die Reaktionstemperatur auch bei schwankender Umsatzgeschwindigkeit und schwankender Wärmeentwicklung durch das Verdampfen von mehr oder weniger Flüssigkeit konstant gehalten werden, so daß eine zusätzliche Temperaturregelung entweder nicht erforderlich ist oder aber wesentlich erleichtert wird.

In diesem Fall ist die Menge der Flüssigkeit nicht kritisch, sofern eine leicht zu ermittelnde Mindestmenge im Reaktionsgefäß vorhanden ist. Ein Überschuß schadet nicht, sollte aber aus ökonomischen Gründen, wenn nicht andere Momente dagegen sprechen, möglichst klein gehalten werden. Im allgemeinen ist eine Druckregelung erforderlich, wenn keine Flüssigkeit zur Verfügung steht, deren Siedetemperatur bei Normaldruck genau der Polymerisationstemperatur entspricht.

Unter Benutzung eines Rückflußkühlers kann die absolut eingesetzte Menge sehr klein gehalten werden.

Die Flüssigkeit kann aber auch so ausgewählt sein, daß ihre Siedetemperatur unter den genutzten Polymerisationsbedingungen kleiner als die Reaktionstemperatur ist. In diesem Fall wird die zugesetzte Flüssigkeit sofort verdampft und liegt im flüssigen Zustand im Reaktionsgemisch praktisch nicht vor. Die Einhaltung der gewünschten Temperatur des Reaktionsgemisches wird über die dosierte Zugabe der Flüssigkeit geregelt. In diesem Fall führt man die kondensierte Flüssigkeit zweckmäßigerweise nicht direkt in das Reaktionsgefäß zurück (Rückflußkühler), sondern leitet sie in ein Vorratsgefäß, aus dem sie über eine Pumpe, die von der Temperatur des Reaktionsgemisches geregelt wird, wieder in das Reaktionsgefäß eindosiert wird.

Der Vorteil dieser Variante liegt darin, daß prinzipiell drucklos gearbeitet werden kann, wenn auch das Anlegen von Über- oder Unterdruck bei dieser Variante nicht ausgeschlossen sein soll, und daß bei der Aufarbeitung leichter zu entfernende Flüssigkeiten (niedrigerer Siedepunkt) in geringerer Menge Verwendung finden können.

Günstig ist es weiterhin, die zur Wärmeabführung eingesetzte Flüssigkeit so auszuwählen, daß ihre Siedetemperatur niedriger als die Siedetemperatur des zu polymerisierenden Monomeren ist, um ein Verdampfen des Monomeren weitgehend zu vermeiden und einer evtl. Polymerisation im Kondensator entgegenzuwirken.

Die Flüssigkeiten werden in einer solchen Menge zugesetzt, daß die im gesamten Reaktor befindliche Menge 0,005 bis 100 Gew.-%, bezogen auf das übrige Reaktionsgemisch aus beispielsweise Wasser und Monomer, beträgt. Die erforderliche Menge der zu verdampfenden Flüssigkeit läßt sich anhand einer Wärmebilanz für den Reaktor leicht berechnen.

Selbstverständlich ist es möglich, zusätzlich die üblichen Heiz- und Kühlaggregate, wie Heiz- und Kühlmäntel zu verwenden, um ein Aufheizen des Polymerisationsansatzes beim Anfahren zu ermöglichen und um weitere Wärmemengen abzuführen.

Verwendet man Wasser oder wäßrige Systeme als Reaktionsmedium für die Polymerisation, so sind inerte Flüssigkeiten bevorzugt, die mit Wasser nicht mischbar sind und die so gewählt werden sollen, daß eine Lösung des Polymeren in diesen Flüssigkeiten vermieden wird.

Besonders bevorzugt sind niedrig siedende Kohlenwasserstoffe, Chlorkohlenwasserstoffe, Chlorfluorkohlenwasserstoffe und Fluorkohlenwasserstoffe, deren Siedetemperaturen unterhalb der Siedetemperatur des zu polymerisierenden Monomeren liegen und die keine oder nur eine sehr geringe Reglerwirkung bei der Polymerisation aufweisen.

Besonders günstig sind Fluor- und Chlorfluorkohlenwasserstoffe, die als nicht brennbare und ungiftige Substanzen Vorteile in der Handhabung aufweisen.

Selbstverständlich können auch Gemische verschiedener Kohlenwasserstoffe, Chlorkohlenwasserstoffe, Chlorfluorkohlenwasserstoffe und Fluorkohlenwasserstoffe eingesetzt werden.

Die nach dem erfindungsgemäßen Verfahren hergestellten Polymerisate können in den für sie üblichen Einsatzgebieten eingesetzt werden.

In vielen Fällen ist es sogar möglich, nach dem erfindungsgemäßen Verfahren Polymerisate mit verbesserten Eigenschaften, wie höheren Molgewichten und verbesserten Thermostabilitäten zu gewinnen.

Die in den folgenden Beispielen angegebenen Lösungsviskositäten der Polymerisate wurden bei 25 °C in 0,5%iger Dimethylformamidlösung bestimmt. Die K-Werte wurden daraus nach Fikentscher, Cellulosechemie 13 (1932), Seite 58 ermittelt.

Beispiel 1

In einem 40 l-Polymerisationsautoklaven, der mit einem Blattrührer und einem Heiz- und Kühlmantel versehen ist und bei Normaldruck mit Rückflußkühler (Solekühlung bei −10 °C) betrieben wird, werden 4,5 kg entionisiertes Wasser und 50 g 1-n-Schwefelsäure gegeben. Man entfernt die überstehende Luft durch Einleiten von Stickstoff, gibt 800 g 1,1,2-Trichlor-1,2,2-trifluorethan zu und stellt eine Vorlauftemperatur des Kühlwassers von 51 °C ein. Die Innentemperatur stellt sich auf die Siedetemperatur des Halogenkohlenwasserstoffs von 47,6 °C ein, wobei ein leichter Rückfluß beobachtet wird. Innerhalb von 5 Stunden pumpt man gleichmäßig folgende vier Lösungen zu:

Lösung 1

39 g Kaliumperoxodisulfat in 7,5 kg entionisiertem Wasser

Lösung 2

120 g Natriumdisulfit in 7,5 kg entionisiertem Wasser

Lösung 3

0,3 g Natriumhexametaphosphat, 0,2 g Aluminiumsulfat und 48 g Natriummethallylsulfonat in 4,5 kg entionisiertem Wasser

Lösung 4

5,6 kg Acrylnitril und 354 g Acrylsäuremethylester.

Die Temperatur des Reaktionsmediums kann während der Polymerisation trotz der Vorlauftemperatur von 51 °C im Kühlmantel bei 47,6 °C gehalten werden, da die freiwerdende Reaktionswärme durch den verdampfenden Halogenkohlenwasserstoff abgeführt wird.

Man rührt 30 Minuten bei 47,6 °C nach, kühlt auf Raumtemperatur ab und läßt die erhaltene Polymerisatsuspension aus dem Autoklaven ab. Das Polymerisat wird abfiltriert, mit entionisiertem Wasser gewaschen und bei 50 °C getrocknet. Man erhält 5 kg Polymerisat (83,3% Ausbeute) mit folgenden Eigenschaften:

Stickstoffgehalt: 24,4 Gew.-%
1n $\eta_r/C$ = 1,88
K-Wert: 101
Extinktion einer 10 gew.-%igen Lösung in DMF:
E = 0,05 (450 nm, 2 cm Küvette)
Extinktion einer 10 gew.-%igen Lösung in DMF nach einer Temperung von 6 h bei 75 °C:
E = 0,20 (450 nm, 2 cm Küvette).

Beispiel 2

In einem 40 l Polymerisationsautoklaven, der mit einem Blattrührer, einem Heiz- und Kühlmantel und einem Druckkühler versehen ist, werden 4,5 kg entionisiertes Wasser und 50 g 1-n-Schwefelsäure gegeben. Man entfernt die überstehende Luft durch Einleiten von Stickstoff, gibt 800 g 1,1,2-Trichlor-1,2,2-trifluorethan zu, stellt den Druck mit der Hilfe eines Druckhalteventils auf 1,3 bar absolut ein und gibt eine Vorlauftemperatur des Kühlwassers von 62 °C vor. Die Innentemperatur stellt sich auf die Siedetemperatur des Halogenkohlenwasserstoffs von 55 °C bei 1,3 bar absolut ein, wobei ein leichter Rückfluß des Halogenkohlenwasserstoffs aus dem Druckkühler beobachtet wird. Innerhalb von 5 Stunden pumpt man gleichmäßig folgende vier Lösungen zu:

Lösung 1

39 g Kaliumperoxodisulfat in 7,5 kg entionisiertem Wasser

Lösung 2

120 g Natriumdisulfit in 7,5 kg entionisiertem Wasser

Lösung 3

0,3 g Natriumhexametaphosphat, 0,2 g Aluminiumsulfat und 48 g Natriummethallylsulfonat in 4,5 kg entionisiertem Wasser

Lösung 4

5,6 kg Acrylnitril, 354 g Acrylsäuremethylester und 800 g 1,1,2-Trichlor-1,2,2-trifluorethan.

Das Reaktionsmedium weist während der Polymerisation die gewünschte Temperatur von 55 °C auf. Ohne Zusatz des Halogenkohlenwasserstoffes muß die Vorlauftemperatur von 62 auf 50 °C erniedrigt werden, um die gewünschte Polymerisationstemperatur von 55 °C einzuhalten.

Die Aufarbeitung wird gemäß Beispiel 1 durchgeführt. Man erhält 5,19 kg Polymerisat (86,5% Ausbeute).

Stickstoffgehalt 24,2 Gew.-%
1n $\eta_r/C$ = 1,29
K-Wert = 82
Extinktion einer 10 gew.-%igen Lösung in DMF
E = 0,08 (450 nm, 2 cm Küvette)
Extinktion einer 10 gew.-%igen Lösung in DMF nach einer Temperung von 6 h bei 75 °C
E = 0,22 (450 nm, 2 cm Küvette).

Beispiel 3

In ein 3 l-Gefäß, das mit einem Wendelrührer und einer Destillationsbrücke versehen ist, werden 330 g Wasser und 3 g 1n-Schwefelsäure gegeben. Man verdrängt die überstehende Luft durch Einleiten von Stickstoff und erwärmt die Vorlage auf eine Innentemperatur von 55 °C.

Durch ein Wasserbad von 56 °C wird die Temperatur im Reaktionsgefäß auf 55 °C gehalten. Man dosiert über drei Tropftrichter folgende Lösungen gleichmäßig innerhalb von 4 Stunden zu:

Lösung 1

3,75 g Kaliumperoxodisulfat und 3 g 1n-Schwefelsäure in 587 g Wasser.

Lösung 2

11,4 g Natriumdisulfit, 0,015 g Aluminiumsulfat, 0,021 g Natriumhexametaphosphat und 5,2 g Natriummethallylsulfonat in 592 g Wasser.

Lösung 3

648 g Acylnitril und 40,8 g Acrylsäuremethylester.

Nach einer kurzen Anlaufphase von 5–10 Minuten dosiert man über einen weiteren Tropftrichter Trichlorfluormethan mit einer solchen Dosiergeschwindigkeit zu, daß die Innentemperatur von 55 °C konstant gehalten werden kann. Im stationären Betriebszustand ist dann eine Dosiergeschwindigkeit von ca. 15 g/min. erforderlich. Das zudosierte Trichlorfluormethan destilliert sofort über die Destillationsbrücke ab, wird dort kondensiert, in einem gekühlten Kolben aufgefangen und kann erneut dem Reaktionsmedium zugeführt werden.

Nach Beendigung der Dosierung der Lösungen 1 bis 3 rührt man 30 Minuten bei 55 °C unter weiterer Zugabe von Trichlorfluormethan nach und kühlt dann auf Raumtemperatur ab. Das Polymerisat wird abfiltriert, mit Wasser gewaschen und bei 50 °C getrocknet.

Man erhält 626 g Polymerisat (Ausbeute 90,2%) mit folgenden Analysendaten:

Stickstoffgehalt: 24,2 Gew.-%
K-Wert: 84

Beispiel 4

Ein an einen Heizkreislauf angeschlossener, doppelwandiger Reaktor, ausgestattet mit einem wandgängigen Gitterrührer und vier Dosiereinrichtungen, enthält als Vorlage:

1250 g Wasser
450 g Acrylpolymerisat (Zus.: 94,3% Acrylnitril, 5,7% Acrylsäuremethylester, K-Wert 82)
2 g 1n-Schwefelsäure
64 g Acrylnitril
4 g Acrylsäuremethylester

Nach Temperierung auf 57 °C wird die Polymerisation durch Zugabe von 0,18 g Na-persulfat und 0,72 g Na-disulfit gestartet.

Danach werden die Lösungen I bis IV gleichlaufend in den nachfolgend genannten Mengen dosiert.

Lösung I:

1000 g Wasser enthaltend 15 g 1n-Schwefelsäure, 0,5 g Al-sulfat, 3,0 g Na-persulfat
Dosiermenge: 100 g/h

Lösung II:

1000 g Wasser enthaltend 21,0 g Na-disulfit, 5,5 g Na-methallylsulfonat
Dosiermenge: 100 g/h

Lösung III:

855 g Acrylnitril, 54 g Acrylsäuremethylester, 66 g Trichlorfluormethan
Dosiermenge: 97,5 g/h

Lösung IV:

1300 g Trichlorfluormethan, 175 g Acrylnitril
Dosiermenge: 295 g/h

Sofort nach Dosierbeginn werden mittels einer an den Bodenabschluß angeschlossenen Pumpe stündlich 291 g der Polymerisatsuspension ausgetragen.

Der Heizkreislauf ist so einreguliert, daß die Temperatur des in die Reaktorwandungen einfließenden Heizmediums übereinstimmend mit der Reaktorinnentemperatur 57 °C beträgt. Die bei der Polymerisation freigesetzte Reaktionswärme wird bei dieser Fahrweise nahezu kompensiert durch den Aufwand zu Energie, der erforderlich ist, um die auf 20 °C temperierten Dosierlösungen bis zur Reaktionstemperatur aufzuheizen und um die dem System zugeführten Mengen an Trichlorfluormethan zu verdampfen.

Der aus dem Reaktor ausströmende gasförmige Fluorchlorkohlenwasserstoff wird zusammen mit gasförmigen Anteilen des Acrylnitrils in einem Kühler kondensiert und in einem Auffanggefäß gesammelt. Stündlich fallen ca. 280 g Kondensat mit einer der Dosierlösung IV entsprechenden Zusammensetzung an. Das Kondensat wird nach ca. 5 Std., d. h nach Erreichen eines umsatzstabilen Zustandes der Polymerisation, über die Dosierung IV direkt in den Polymerisationsprozess zurückgeführt.

Die danach kontinuierlich dem Reaktor entnommene Polymerisatsuspension mit einem Feststoffgehalt von 27,3 Gew.-%, das entspricht einem Umsatz von 83%, enthält neben den Restmonomeranteilen noch ca. 800 ppm Trichlorfluormethan. Nach üblicher Aufarbeitung der Polymerisatsuspension (Entmonomerisierung, Wäsche und Trocknung) resultiert ein pulverförmiges Polymerisat:

Zusammensetzung: 94 Gew.-% Acrylnitril
5,6 Gew.-% Acrylsäuremethylester
0,4 Gew.-% Na-methallylsulfonat
K-Wert: 82,5

Der so gewonnene Acrylfaserrohstoff entspricht in seinen sonstigen chemischen und physikalischen Eigenschaften sowie in seinem Verarbeitungsverhalten dem bekannten Qualitätsstandard.

**Patentansprüche**

1. Verfahren zur Polymerisation von Vinylmonomeren in heterogener Phase unter Zusatz einer niedrigsiedenden Flüssigkeit, die nicht die Polymerisationsreaktion beeinflußt und durch Rückflußsieden das Polymerisationssystem bei relativ gleichmäßiger Temperatur hält, dadurch gekennzeichnet, daß man in Wasser oder einem wäßrigen Polymerisationsmedium Vinylmonomere einsetzt, deren Homo- oder Copolymerisate im gewählten Reaktionsmedium unlöslich sind, wobei als Vinylmonomere Styrole, Halogenolefine, Vinylester, Vinylether, ungesättigte Nitrile, Ester der Acryl- und Methacrylsäure, Maleinimid, N-substituierte Maleinimide und Diolefine eingesetzt werden, als niedrigsiedene Flüssigkeit solche zugesetzt werden, die unter den Reaktionsbedingungen das Polymerisat nicht lösen, deren Siedetemperatur unter den genutzten Polymerisationsbedingungen kleiner als die technisch vorgegebenen Umsetzungstemperaturen sind, und in einer solchen Menge zugesetzt werden, daß die im gesamten Reaktor befindliche Menge 0,005 bis 5,3 Gew.-%, bezogen auf das übrige Reaktionsgemisch, beträgt, die zugesetzte Flüssigkeit verdampft, die Einhaltung der gewünschten Temperatur des Reaktionsgemisches durch dosierte Zugabe der kondensierten Flüssigkeit, die über eine Pumpe die Flüssigkeit wieder in das Reaktionsgefäß eindosiert, gesteuert wird, und daß die Polymerisation ein Perlpolymerisation, Suspensionspolymerisation, Emulsionspolymerisation oder Fällungspolymerisation ist.

2. Verfahren nach Anspruch 1, dadurch gekennzeichnet, daß die Flüssigkeit in einer Menge von 2,65 bis 5,3 Gew.-%, bezogen auf das übrige Reaktionsgemisch, beträgt.

3. Verfahren nach Anspruch 1 und 2, dadurch gekennzeichnet, daß die Pumpe, über die die Flüssigkeit wieder in das Reaktionsgefäß eingepumpt wird, von der Temperatur des Reaktionsgefäßes geregelt wird.

4. Verfahren nach Ansprüchen 1 bis 3, dadurch gekennzeichnet, daß die Flüssigkeit Trichlorfluormethan oder 1,1,2-Trichlor-1,2,2-trifluor-ethan ist.

5. Verfahren nach Ansprüchen 1 bis 4, dadurch gekennzeichnet, daß man in wäßrigem Medium Acrylnitril alleine oder mit bis zu 50 Gew.-% an Acrylnitril copolymerisierbaren, ethylenisch ungesättigten Verbindungen, bzw. mit bis zu 25 Gew.-% an Vinylmonomeren, deren Homopolymerisate in dem gewählten Reaktionsmedium löslich sind, in einer Fällungspolymerisation umsetzt.

6. Verfahren nach Ansprüchen 1 bis 4, dadurch gekennzeichnet, daß man im wäßrigen Medium Ester der Acrylsäure und der Methacrylsäure allein oder mit bis zu 50 Gew.-% an weiteren Comonomeren, bzw. von Styrol allein oder mit bis zu 50 Gew.-% an weiteren Comonomeren wie Acrylnitril, Acrylsäureester oder Butadien nach der Emulsions- oder Perlpolymerisationsmethode umsetzt.

7. Verfahren nach Ansprüchen 1 bis 4, dadurch gekennzeichnet, daß man in wäßrigem Medium Diolefin allein oder mit bis zu 50 Gew.-% an weiteren Comonomeren wie Styrol, Acrylnitril oder Acrylsäureester nach der Emulsionspolymerisationsmethode umsetzt.

8. Verfahren nach Ansprüchen 1 bis 4, dadurch gekennzeichnet, daß man in wäßrigem Medium Vinylchlorid alleine oder mit bis zu 50 Gew.-% an weiteren Comonomeren wie Vinylidenchlorid, Vinylacetat, Acrylnitril, Acrylsäureester, Methacrylsäureester, Estern der Maleinsäure und der Fumarsäure nach der Emulsions- oder Suspensionspolymerisation umsetzt.

9. Verfahren nach Ansprüchen 1 bis 4, dadurch gekennzeichnet, daß man in wäßrigem Medium Vinylester wie Vinylacetat, Vinylpropionat oder Vinylstearat alleine oder mit bis zu 50 Gew.-% an weiteren Comonomeren wie ungesättigten Dicarbonsäure bzw. deren Estern, Maleinsäureanhydrid, Maleinsäurehalbester, Acrylsäure, Vinylchlorid oder Estern der Acryl- und Methacrylsäure nach der Emulsionspolymerisation, Perlpolymerisation oder Dispersionspolymerisation umsetzt.

10. Verfahren nach Ansprüchen 1 bis 9, dadurch gekennzeichnet, daß als niedrigsiedende Flüssigkeit niedrigsiedende Kohlenwasserstoffe, vorzugsweise aliphatische Kohlenwasserstoffe mit bis zu 8 C-Atomen, Cyclohexan, Benzol, Ether, Ester, Schwefelkohlenstoff, ferner Chlorkohlenwasserstoffe, Chlorfluorkohlenwasserstoffe oder Fluorkohlenwasserstoffe mit bis zu 8 C-Atomen und Siedepunkten von −90°C bis +90°C zugesetzt werden.

## Claims

1. A process for the polymerization of vinyl monomers in heterogeneous phase with addition of a low-boiling liquid which has no effect on the polymerization reaction and keeps the polymerization system at a relatively uniform temperature by boiling under reflux, characterized in that vinyl monomers of which the homo- or copolymers are insoluble in the selected reaction medium are used in water or an aqueous polymerization medium, the vinyl monomers used being styrenes, halo-olefins, vinyl esters, vinyl ethers, unsaturated nitriles, esters of acrylic and methacrylic acid, maleic imide, N-substituted maleic imides and diolefins, and the low-boiling liquid added is selected from those which do not dissolve the polymer under the reaction conditions and of which the boiling temperature under the polymerization conditions used is below the predetermined reaction temperatures and is added in such a quantity that the quantity in the reactor as a whole amounts to between 0.005 and 5.3% by weight, based on the rest of the reaction mixture, the liquid added is evaporated, maintenance of the desired temperature of the reaction mixture is controlled by measured addition of the condensed liquid which introduces the liquid back into the reaction vessel via a pump and the polymerization is a bead polymerization, suspension polymerization, emulsion polymerization or precipitation polymerization.

2. A process as claimed in claim 1, characterized in that the liquid is added in a quantity of 2.65 to 5.3% by weight, based on the rest of the reaction mixture.

3. A process as claimed in claims 1 and 2, characterized in that the pump by which the liquid is pumped back into the reaction vessel is controlled by the temperature of the reaction vessel.

4. A process as claimed in claims 1 to 3, characterized in that the liquid is trichlorofluoromethane or 1,1,2-trichloro-1,2,2-trifluoroethane.

5. A process as claimed in claims 1 to 4, characterized in that acrylonitrile is reacted by precipitation polymerization in aqueous medium either on its own or with up to 50% by weight ethylenically unsaturated compounds copolymerizable with acrylonitrile or with up to 25% by weight vinyl monomers of which the homopolymers are soluble in the selected reaction medium.

6. A process as claimed in claims 1 to 4, characterized in that esters of acrylic acid and methacrylic acid are reacted by emulsion or bead polymerization in aqueous medium either on their own or with up to 50% by weight of other comonomers or styrene is reacted in the same way on its own or with up to 50% by weight of other comonomers, such as acrylonitrile, acrylates or butadiene.

7. A process as claimed in claims 1 to 4, characterized in that diolefins are reacted by emulsion polymerization in aqueous medium either on their own or with up to 50% by weight of other comonomers, such as styrene, acrylonitrile or acrylates.

8. A process as claimed in claims 1 to 4, characterized in that vinyl chloride is reacted by emulsion or suspension polymerization in aqueous medium either on its own or with up to 50% by weight of other comonomers, such as vinylidene chloride, vinyl acetate, acrylonitrile, acrylates, methacrylates, esters of maleic acid and fumaric acid.

9. A process as claimed in claims 1 to 4, characterized in that vinyl esters, such as vinyl acetate, vinyl propionate or vinyl stearate, are reacted by emulsion polymerization, bead polymerization or dispersion polymerization in aqueous medium either on their own or with up to 50% by weight of other comonomers, such as unsaturated dicarboxylic acids or esters thereof, maleic anhydride, maleic acid semiesters, acrylic acid, vinyl chloride or acrylates and methacrylates.

10. A process as claimed in claims 1 to 9, characterized in that low-boiling hydrocarbons, preferably aliphatic hydrocarbons containing up to 8 carbon atoms, cyclohexane, benzene, ethers, esters, carbon disulfide and also chlorinated hydrocarbons, chlorofluorinated hydrocarbons or fluorinated hydrocarbons containing up to 8 carbon atoms and having boiling points in the range from $-90\,°C$ to $+90\,°C$ are added as the low-boiling liquid.

**Revendications**

1. Procédé de polymérisation de monomères vinyliques en phase hétérogène avec addition d'un liquide de bas point d'ébullition qui n'exerce pas d'influence sur la réaction de polymérisation et qui maintient par ébullition au reflux le système en cours de polymérisation à une température relativement régulière, caractérisé en ce qu'on utilise, dans l'eau ou dans un milieu aqueux de polymérisation, des monomères vinyliques dont les produits d'homopolymérisation ou de copolymérisation sont insolubles dans le milieu réactionnel choisi, et on utilise alors comme monomères vinyliques des styrènes, des oléfines halogénées, des esters de vinyle, des éthers de vinyle, des nitriles non saturés, des esters d'acide acrylique et d'acide méthacrylique, le maléimide, des maléimides substitués sur l'atome d'azote et des dioléfines, on ajoute comme liquide de bas point d'ébullition des liquides qui ne dissolvent pas le polymérisat dans les conditions de réaction, dont la température d'ébullition dans les conditions utilisées de polymérisation est inférieure aux températures de réaction prédéterminées du point de vue technique, et que l'on ajoute en une quantité telle que la quantité se trouvant dans l'ensemble du réacteur se situe entre 0,005 et 5,3% en poids sur la base du mélange réactionnel restant, le liquide ajouté est évaporé, le maintien de la température désirée du mélange réactionnel est assuré par l'addition dosée du liquide condensé qui (le liquide) est introduit de nouveau dans le récipient de réaction au moyen d'une pompe, et en ce que la polymérisation est une polymérisation en perles, une polymérisation en suspension, une polymérisation en émulsion ou une polymérisation par précipitation.

2. Procédé suivant la revendication 1, caractérisé en ce que le liquide représente une quantité de 2,65 à 5,3% en poids par rapport au mélange réactionnel restant.

3. Procédé suivant les revendications 1 et 2, caractérisé en ce que la pompe au moyen de laquelle le liquide est réintroduit dans le récipient de réaction est réglée par la température de ce récipient.

4. Procédé suivant les revendications 1 à 3, caractérisé en ce que le liquide est du trichlorofluorométhane ou du 1,1,2-trichloro-1,2,2-trifluoréthane.

5. Procédé suivant les revendications 1 à 4, caractérisé en ce qu'on fait réagir dans une polymérisation par précipitation en milieu aqueux de l'acrylonitrile seul ou avec jusqu'à 50% en poids de composés à non-saturation éthylénique copolymérisables avec l'acrylonitrile, ou avec jusqu'à 25% en poids de monomères vinyliques dont les homopolymérisats sont solubles dans le milieu réactionnel choisi.

6. Procédé suivant les revendications 1 à 4, caractérisé en ce qu'on fait réagir en milieu aqueux des esters d'acide acrylique ou d'acide méthacrylique seuls ou avec jusqu'à 50% en poids d'autres comonomères ou du styrène seul ou avec jusqu'à 50% en poids d'autres comonomères tels que l'acrylonitrile, un ester d'acide acrylique ou le butadiène, par le procédé de polymérisation en émulsion ou de polymérisation en perles.

7. Procédé suivant les revendications 1 à 4, caractérisé en ce qu'on fait réagir en milieu aqueux des dioléfines seules ou avec jusqu'à 50% en poids d'autres comonomères tels que styrène, acrylonitrile ou esters d'acide acrylique par le procédé de polymérisation en émulsion.

8. Procédé suivant les revendications 1 à 4, caractérisé en ce qu'on fait réagir en milieu aqueux du chlorure de vinyle seul ou avec jusqu'à 50% en poids d'autres comonomères tels que le chlorure de vinylidène, l'acétate de vinyle, l'acrylonitrile, un ester d'acide acrylique, un ester d'acide méthacrylique, des esters d'acide maléique et d'acide fumarique, par le procédé de polymérisation en émulsion ou en suspension.

9. Procédé suivant les revendications 1 à 4, caractérisé en ce qu'on fait réagir en milieu aqueux des esters de vinyle tels que l'acétate de vinyle, le propionate de vinyle ou le stéarate de vinyle seuls ou avec jusqu'à 50% en poids d'autres comonomères tels qu'un acide dicarboxylique insaturé ou ses esters, l'anhydride d'acide maléique, un demi-ester d'acide maléique, l'acide acrylique, le chlorure de vinyle ou des esters d'acide acrylique et d'acide méthacrylique par polymérisation en émulsion, polymérisation en perles ou polymérisation en dispersion.

10. Procédé suivant les revendications 1 à 9, caractérisé en ce qu'on ajoute comme liquide de bas point d'ébullition, des hydrocarbures de bas point d'ébullition, de préférence des hydrocarbures aliphatiques ayant jusqu'à 8 atomes de carbone, le cyclohexane, le benzène, un éther, un ester, le sulfure de carbone, en outre des hydrocarbures chlorés, des hydrocarbures chlorofluorés ou des hydrocarbures fluorés ayant jusqu'à 8 atomes de carbone et des points d'ébullition de −90 °C à +90 °C.